# FASCICULE DE BREVET EUROPEEN

(11) **EP 1 564 141 B1**
(45) Date de publication et mention de la délivrance du brevet: **01.08.2007**
(21) Numéro de dépôt: 05101013.0
(22) Date de dépôt: 11.02.2005
(51) Int. Cl.: B64D 11/06

(54) **Rail de siège pour cabine d'aéronef et procédé de fabrication d'un tel rail**
Flugzeugsitzschiene und deren Fertigungsverfahren
Aircraft seat rail and its production method

(30) Priorité: 13.02.2004 FR 0450264
(43) Date de publication de la demande: 17.08.2005
(73) Titulaire: AIRBUS France, 31060 Toulouse (FR)
(72) Inventeur: RICAUD, Alexandre, 82170, GRISOLLES (FR)
(74) Mandataire: Poulin, Gérard

(56) Documents cités:
- EP-A- 0 463 757
- EP-A- 0 853 039
- DE-A- 4 419 139
- US-A- 4 479 621
- US-A- 5 301 914
- US-B1- 6 554 225

## Description

### DOMAINE TECHNIQUE

La présente invention se rapporte de façon générale à un rail de siège équipant un plancher de cabine d'aéronef, ainsi qu'à un procédé de fabrication d'un tel rail.

### ETAT DE LA TECHNIQUE ANTERIEURE

Ce type de rail est bien connu de l'art antérieur. Il comporte classiquement une âme située entre une semelle supérieure et une semelle inférieure, la semelle supérieure étant solidaire de moyens d'accrochage de sièges.

De façon connue, les rails de siège sont assemblés fixement à la structure de l'aéronef située au-dessous du plancher, de manière à assurer un maintien mécanique sûr de ces mêmes rails. A ce titre, il est précisé que le maintien est obtenu à l'aide d'une pluralité d'ensembles de fixation agencés de façon espacée les uns des autres le long du rail, ces ensembles comportant généralement chacun une bielle reliant la structure de l'aéronef à l'âme du rail.

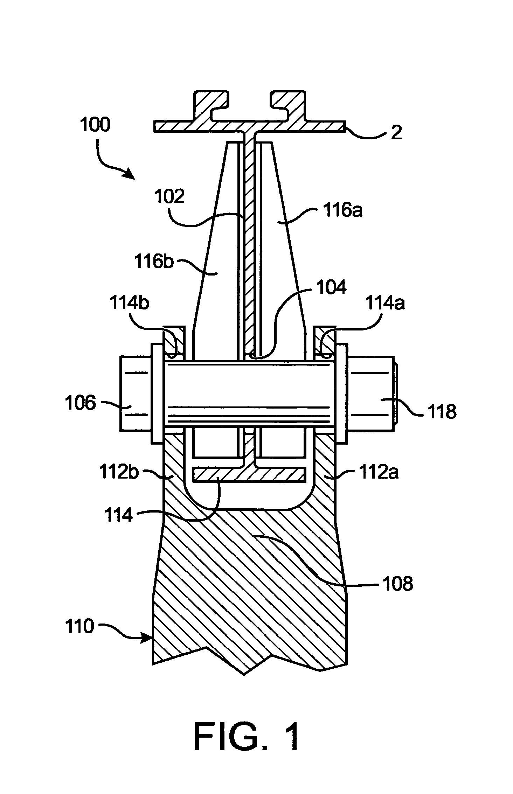

Effectivement, en référence à la figure 1, on connaît de l'art antérieur une solution consistant à prévoir un rail de siège 100 dont l'âme 102 est pourvue de plusieurs orifices 104 (un seul étant visible sur la figure), ces orifices 104 étant assimilables à des points d'ancrage du rail dans la mesure où chacun d'entre eux est traversé par un axe 106 traversant également une extrémité en forme de chape 108 de la bielle 110 appartenant à un ensemble de fixation donné.

Au vu de ce qui précède, il apparaît évident que les deux têtes 112a, 112b de la chape 108 doivent être suffisamment éloignées l'une de l'autre pour pouvoir autoriser le passage de la semelle inférieure 114 entre celles-ci, l'insertion de cette semelle 114 entre les deux têtes 112a,112b étant en effet impérative pour permettre aux orifices 114a,114b, prévus sur ces mêmes têtes, d'être en regard de l'orifice 104 pratiqué dans l'âme 102 du rail 100.

La conséquence d'un tel montage est que les deux têtes 112a,112b de l'extrémité de bielle en forme de chape 108 se trouvent fortement écartées et à distance de l'âme 102, ce qui implique de prévoir notamment des plaques d'interposition additionnelles 116a,116b entre chacune des têtes 112a,112b et cette même âme 102, dans le but d'obtenir un empilement d'éléments en contact deux à deux. Avec une telle configuration, il est alors possible d'effectuer un serrage correct par vissage d'un écrou 118 sur l'axe 106 précité.

Si cette solution procure un montage satisfaisant du rail sur la structure de l'aéronef, il est cependant indiqué que pour chaque point d'ancrage du rail, l'ensemble de fixation associé incorpore un nombre de pièces extrêmement important, qui est largement contraignant en termes de masse associée. A cet égard, il est précisé que l'inconvénient précité lié à la masse des ensembles de fixation est d'autant plus contraignant que sur les aéronefs, le nombre de points d'ancrage peut être extrêmement élevé, par exemple supérieur à deux cents. Par conséquent, c'est en effet autant d'ensembles de fixation qu'il est nécessaire de prévoir pour réaliser l'assemblage des rails de siège sur la structure de l'aéronef.

Par ailleurs, la multitude de pièces requises pour constituer les ensembles de fixation présente également les inconvénients que le temps de montage de ces ensembles et que le coût de ces derniers sont très élevés.

En outre, les nombreuses pièces métalliques en contact sont naturellement sujettes à la corrosion galvanique. Cela nécessite alors de procéder à l'application de couches protectrices lors de l'assemblage, qui prolongent alors encore davantage le temps de montage du rail sur la structure de l'aéronef.

D'autre part, il est noté que les rails de siège pour cabine d'aéronef présentent en général une longueur importante, puisque celle-ci est souvent supérieure à 5 m, et peut parfois atteindre 10 m ou plus. Néanmoins, il est tout de même nécessaire de procéder à l'éclissage d'une pluralité de rails afin que ceux-ci forment conjointement des tronçons s'étendant sur une longueur plus significative, pouvant parfois s'approcher de la longueur totale de la cabine de l'aéronef. Or il est évident que les pièces de l'ensemble de fixation situées au niveau de l'âme d'une extrémité d'un rail complique fortement la réalisation de l'éclissage avec un rail adjacent.

De l'art antérieur, on connaît également le document US 6 554 225 B1, décrivant un plancher pour aéronef comprenant des rails pour sièges dont la conception est similaire à celle revendiquée dans le préambule de la revendication 1. Cependant, ce rail est fixé directement sur le plancher à l'aide d'organes de raccordement prenant la forme d'extensions latérales de la semelle supérieure en appui sur ce même plancher, ces extensions étant traversées par des moyens de fixation orientés orthogonalement par rapport à cette même semelle supérieure. De ce fait, le rail tel que décrit dans le document US 6 554 225 B1 n'est aucunement adapté pour pouvoir être monté sur des bielles le raccordant à une structure de l'aéronef située en dessous du plancher au niveau duquel se situe ce rail de siège.

### EXPOSÉ DE L'INVENTION

L'invention a donc pour but de proposer un rail de siège pour cabine d'aéronef, dont la conception permet de remédier au moins partiellement aux inconvénients mentionnés ci-dessus relatifs aux réalisations de l'art antérieur.

Par ailleurs, le but de la présente invention est de proposer un procédé de fabrication d'un tel rail de siège.

Pour ce faire, l'invention a tout d'abord pour objet un rail de siège pour cabine d'aéronef, le rail comportant une âme située entre une semelle supérieure et une semelle inférieure disposant d'une surface externe ainsi que d'une surface interne solidaire de l'âme, ladite semelle supérieure disposant également d'une surface externe et d'une surface interne solidaire de l'âme, la surface externe de la semelle supérieure étant solidaire de moyens d'accrochage de siège. Selon l'invention, le rail est également équipé d'une pluralité d'organes de raccordement destinés à permettre sa fixation sur une structure de l'aéronef et étant réalisés d'un seul tenant avec l'âme, les semelles supérieure et inférieure et les moyens d'accrochage de sièges, chaque organe de raccordement présentant au moins un orifice traversant et faisant saillie de la surface externe de la semelle inférieure.

Ainsi, les organes de raccordement du rail de siège selon l'invention constituent des points d'ancrage qui, contrairement à l'art antérieur, se situent à distance de l'âme du rail, puisqu'ils sont séparés de cette âme par la semelle inférieure.

L'avantage relatif à une telle configuration est que des ensembles de fixation assurant le montage du rail sur la structure de l'aéronef n'ont plus à coopérer avec l'âme du rail, et n'ont par conséquent plus à être conçus en fonction de la géométrie de la semelle inférieure comme cela était le cas antérieurement. Ainsi, la conception de ces ensembles de fixation peut être simplifiée et leur nombre de pièces constitutives réduit, de sorte que l'on peut alors avantageusement obtenir des gains en termes de coûts, de masse, et de temps de montage. A titre indicatif, lorsqu'un ensemble de fixation comporte une bielle à extrémité en forme de chape, cette extrémité peut alors être directement montée sur l'organe de raccordement située au-dessous de l'âme, sous la semelle inférieure, sans qu'il ne soit nécessaire d'interposer des plaques additionnelles comme cela est montré sur la figure 1 représentant l'art antérieur.

D'autre part, l'âme du rail n'étant pas destinée à recevoir des pièces appartenant aux ensembles de fixation, les opérations d'éclissage sont par conséquent facilement envisageables.

Par ailleurs, le fait que les organes de raccordement soient réalisés d'un seul tenant avec l'âme et les semelles supérieure et inférieure permet également de diminuer le temps de montage du rail sur la structure de l'aéronef, et limite en outre le nombre de pièces sujettes à la corrosion galvanique.

De plus, cette réalisation d'un seul tenant du rail de siège implique avantageusement que lorsque les organes de raccordement se situent sensiblement dans le prolongement de l'âme, les efforts passant dans ces organes se propagent ensuite directement dans l'âme du rail, sans risquer de déformer les extrémités latérales libres de la semelle inférieure.

De préférence, chaque organe de raccordement est un tenon par exemple destiné à coopérer avec une chape d'un ensemble de fixation reliant le rail à la structure de l'aéronef, ou encore une chape par exemple destinée à coopérer avec un tenon d'un tel ensemble de fixation. Dans les deux cas proposés, le simple montage d'un axe traversant le tenon et la chape susvisés permet avantageusement d'obtenir la liaison mécanique entre le rail et la bielle d'un ensemble de fixation donné.

Préférentiellement, la semelle supérieure dispose d'une surface externe ainsi que d'une surface interne solidaire de l'âme, cette surface externe étant solidaire de moyens d'accrochage de sièges, qui sont de préférence réalisés d'un seul tenant avec l'âme, les semelles supérieure et inférieure, et les organes de raccordement.

L'invention a également pour objet un procédé de fabrication d'un rail de siège pour cabine d'aéronef tel que celui exposé ci-dessus et également objet de la présente invention, ce procédé comprenant les étapes suivantes :
- la réalisation d'un ensemble monobloc comportant l'âme, les semelles supérieure et inférieure, ainsi qu'une plaque parallèle à l'âme et faisant saillie de la surface externe de la semelle inférieure ; et
- l'usinage de la plaque visant à éliminer des portions de celles-ci, afin de faire apparaître la pluralité d'organes de raccordement.
   D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue en coupe transversale d'un rail de siège pour cabine d'aéronef selon l'art antérieur, le rail étant montré en coopération avec une partie d'un ensemble de fixation assurant l'assemblage de ce rail sur une structure de l'aéronef ;
- la figure 2 représente une vue de côté d'une partie d'un rail de siège pour cabine d'aéronef selon un mode de réalisation préféré de la présente invention, le rail étant montré en coopération avec une pluralité d'ensembles de fixation assurant l'assemblage de ce rail sur une structure de l'aéronef également partiellement représentée ;
- la figure 3 est une vue en coupe prise le long de la ligne III-III de la figure 2 ;
- la figure 3a représente une vue similaire à celle de la figure 3, le rail de siège se présentant sous une forme alternative du mode de réalisation préféré représenté sur les figures 2 et 3 ;
- la figure 4 représente une vue de côté d'un ensemble monobloc réalisé lors de la mise en oeuvre d'un premier mode de réalisation préféré du procédé de fabrication d'un rail de siège selon l'invention ;
- la figure 5 est une vue en coupe prise le long de la ligne V-V de la figure 4 ;
- la figure 6 est une vue de côté schématisant l'étape d'usinage de l'ensemble monobloc représenté sur les figures 4 et 5, réalisée lors de la mise en oeuvre du premier mode de réalisation préféré du procédé selon l'invention ;
- la figure 7 est une vue de côté schématisant l'étape d'usinage de l'ensemble monobloc représenté sur les figures 4 et 5, réalisée lors de la mise en oeuvre d'un second mode de réalisation préféré du procédé selon l'invention ; et
- la figure 8 est une vue en coupe prise le long de la ligne VIII-VIII de la figure 7.

### EXPOSÉ DÉTAILLÉ DE MODES DE RÉALISATION PRÉFÉRÉS

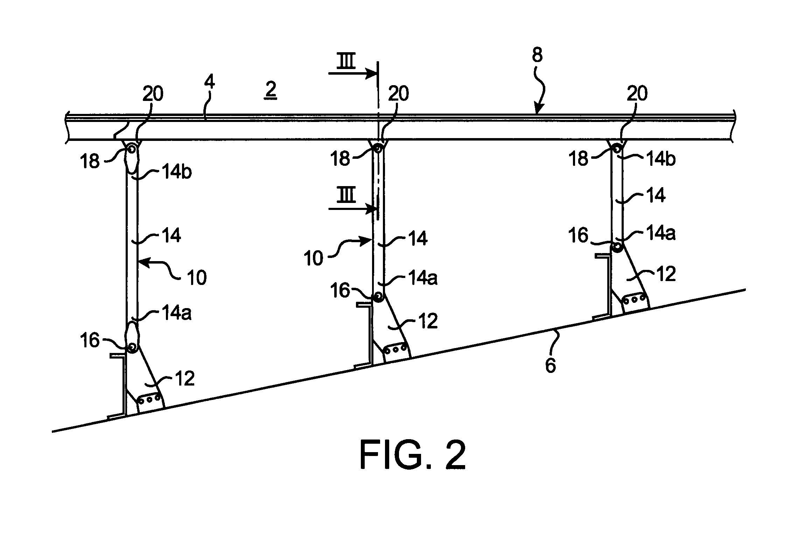

En référence à la figure 2, on peut grossièrement apercevoir une partie d'un aéronef (non référencé) comportant une cabine 2, un plancher de cabine 4, ainsi qu'une structure inférieure 6 de l'aéronef.

De plus, on peut également voir un rail de siège 8 selon un mode de réalisation préféré de la présente invention, ce rail 8 étant agencé au niveau du plancher 4. A cet égard, il est précisé qu'un seul rail 8 est visible sur la figure 2, mais que le plancher 8 est en réalité équipé d'une pluralité de rails disposés parallèlement les uns aux autres, et pour certains, les uns dans le prolongement des autres afin d'obtenir des tronçons de grande longueur par éclissage. A titre indicatif, le rail de siège 8 peut présenter une longueur élevée telle que 5 m, et peut même être réalisé de manière à atteindre 10 m ou plus.

Le rail de siège 8 selon le mode de réalisation préféré décrit est monté de façon rigide sur la structure 6 de l'aéronef située au-dessous du plancher 4, par l'intermédiaire d'une pluralité d'ensembles de fixation 10 espacés le long du rail 8. A titre d'exemple indicatif, deux ensembles de fixation 10 directement consécutifs et associés au rail 8 peuvent être espacés d'une longueur comprise entre environ 500 et 800 mm.

Comme on peut clairement l'apercevoir sur la figure 2, chaque ensemble de fixation 10 comporte une ferrure 12 montée fixement sur la structure inférieure 6, ainsi qu'une bielle 14 agencée de préférence sensiblement perpendiculairement au plancher 4, cette bielle 14 disposant d'une extrémité basse 14a montée de façon pivotante sur la ferrure 12, à l'aide d'un axe 16.

Par ailleurs, la bielle 14 de l'ensemble de fixation 10 comporte également une extrémité haute 14b qui est montée de façon pivotante à l'aide d'un axe 18 sur un organe de raccordement 20 faisant partie intégrante du rail 8, comme cela sera exposé plus en détail ci-dessous.

Il est noté que tous les ensembles de fixation 10 du rail de siège 8 sont préférentiellement conçus de la manière qui vient d'être décrite, seule la longueur des bielles 14 étant variable en fonction de l'écartement entre la structure 6 et l'organe de raccordement 20 concerné, comme on le voit clairement sur la figure 2.

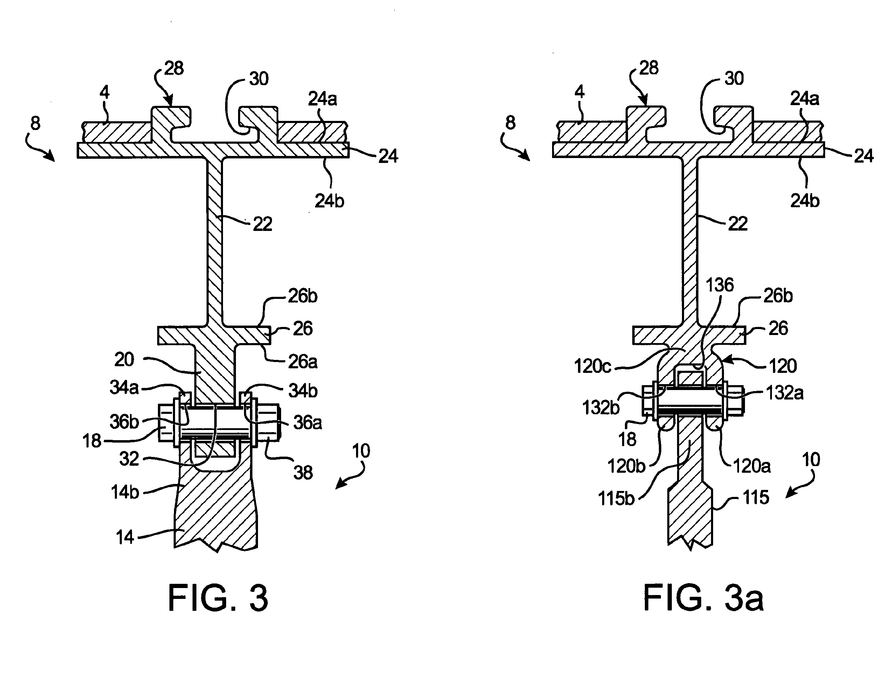

A présent en référence à la figure 3, le rail de siège 8 comporte une âme 22 perpendiculaire au plancher 4, cette âme 22 étant située entre une semelle supérieure 24 et une semelle inférieure 26, les deux semelles 24 et 26 étant parallèles au plancher 4 de la cabine 2 de l'aéronef.

Plus précisément, la semelle supérieure 24 comporte une surface externe 24a sur laquelle sont prévus des moyens d'accrochage de siège 28 du type classique, à savoir définissant une rainure 30 à l'intérieur de laquelle peuvent être insérés des pieds de sièges par coulissement.

La semelle supérieure 24 comporte aussi une surface interne 24b solidaire de l'âme 22. En d'autres termes, la surface interne 24b établit la jonction entre l'âme 22 et la semelle supérieure 24 du rail de siège 8.

En outre, la semelle inférieure 26 comporte une surface externe 26a sur laquelle sont agencés les organes d'accrochage 20 assimilables à des points d'ancrage du rail 8 dans la structure 6 (un seul organe 20 étant visible sur la figure 3), ces organes 20 faisant effectivement saillie de la surface externe 26a. La semelle inférieure 26 comporte aussi une surface interne 26b solidaire de l'âme 22.

Une particularité de l'invention réside dans le fait que l'âme 22, les semelles 24,26, les organes de raccordement 20 et de préférence également les moyens d'accrochage 28, forment conjointement un ensemble réalisé d'un seul tenant, par exemple en aluminium ou dans l'un de ses alliages.

Comme on peut le voir sur la figure 3, les organes de raccordement 20 sont situés au-dessous de la semelle inférieure 26, dans la mesure où le rail 8 peut être assimilé à la superposition, dans l'ordre cité, des moyens d'accrochage de sièges 28, de la semelle supérieure 24, de l'âme 22, de la semelle inférieure 26 et des organes d'accrochage 20 espacés les uns des autres le long de ce rail 8. De plus, dans ce mode de réalisation préféré, chaque organe de raccordement se situe dans le prolongement de l'âme 22, vers le bas. En d'autres termes, même si les organes de raccordement 20 peuvent disposer d'une épaisseur différente de celle de l'âme 22, ces éléments 20 et 22 se trouvent agencés sensiblement dans un même plan perpendiculaire au plancher 4.

Les organes de raccordement 20 représentés sur les figures 2 et 3 prennent la forme d'un tenon, de préférence de forme plate et triangulaire, chacun d'entre eux étant pourvu d'un orifice traversant 32. Comme mentionné précédemment et visible sur la figure 3, le tenon 20 se situe effectivement dans un même plan (non représenté) que l'âme 22, de sorte qu'il constitue par conséquent le prolongement géométrique de cette dernière.

Dans ce mode de réalisation préféré de la présente invention, le choix d'un tenon pour former l'organe de raccordement 20 est motivé par le fait que la bielle 14 de l'ensemble de fixation 10 associé présente une extrémité haute 14b en forme de chape. De cette manière, la chape 14b présente deux têtes 34a,34b dont l'écartement est proche de l'épaisseur du tenon 20, et dont deux orifices 36a,36b respectivement prévus sur ces têtes 34a,34b sont placés en regard de l'orifice traversant 32, afin d'être traversés par l'axe 18 traversant également cet orifice 32. La liaison mécanique entre le tenon 20 et la chape 14b peut alors être complétée par le vissage d'un écrou 38 à l'extrémité de l'axe 18, ce dernier étant en appui extérieur contre l'une des deux têtes 34a,34b, et l'écrou 38 étant en appui extérieur contre l'autre des deux têtes 34a,34b.

En référence à la figure 3a, il est représenté un rail de siège 8 selon une alternative du mode de réalisation préféré qui vient d'être décrit. Ce rail 8 de la figure 3a est sensiblement identique au rail 8 des figures 2 et 3, et il est indiqué à ce titre que les éléments des figures portant les mêmes références numériques correspondent à des éléments identiques ou similaires.

Dans cette alternative, seul l'organe de raccordement 120 diffère par rapport à l'organe de raccordement 20 décrit ci-dessus. En effet, l'organe 120 prend la forme d'une chape se situant dans le prolongement géométrique vers le bas de l'âme 22, toujours en étant séparé de celle-ci par la semelle inférieure 26. En d'autres termes, la chape 120 comporte une base 120c située dans une même plan que l'âme 22, et à partir de laquelle s'étendent deux têtes de chape 120a,120b situées de part et d'autre du plan précité, parallèlement à ce dernier.

Cette configuration est adoptée lorsque l'ensemble de fixation 10 associé à l'organe 120 comporte une bielle 115 dont une extrémité haute 115b prend la forme d'un tenon. En effet, le tenon 115b d'épaisseur sensiblement identique à un écartement des têtes 120a,120b peut alors être assemblé sur la chape 120 à l'aide d'un axe 18, ce dernier traversant deux orifices traversants 132a,132b respectivement prévus sur les têtes 120a,120b, ainsi qu'un orifice 136 pratiqué dans le tenon 115b de la bielle 115.

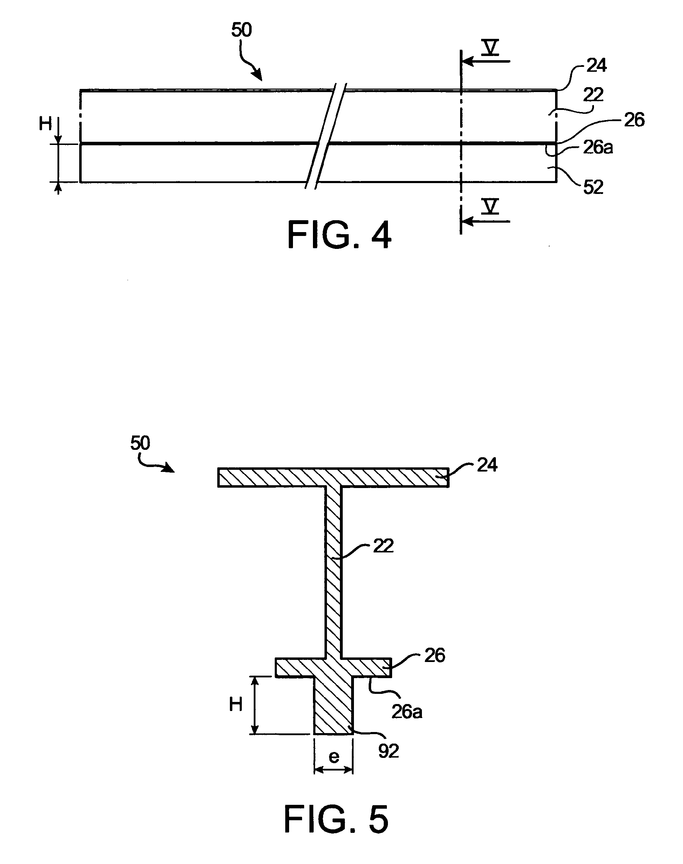

En référence aux figures 4 à 6, il est illustré schématiquement différentes étapes d'un premier mode de réalisation préféré du procédé de fabrication selon l'invention, la mise en oeuvre de ce premier mode de réalisation préféré permettant d'obtenir un rail de siège 8 tel que celui montré sur les figures 2 et 3.

En référence conjointement aux figures 4 et 5, une première étape consiste tout d'abord à réaliser un ensemble monobloc 50 comportant l'âme 22, les semelles supérieure 24 et inférieure 26, ainsi qu'une plaque 52 parallèle à l'âme 22 et faisant saillie de la surface externe 26a de la semelle inférieure 26. Naturellement, la plaque 52 s'étend sur une longueur identique à celle des éléments 22, 24, et 26, correspondant également à la longueur du rail final 8, et pouvant atteindre jusqu'10 m ou plus.

Il est indiqué que cette étape est préférentiellement effectuée par laminage, impliquant que les éléments 22, 24 et 26 obtenus suite à cette étape peuvent naturellement être amenés à subir des opérations de finition.

D'autre part, comme les organes de raccordement 20 désirés doivent se situer dans le prolongement de l'âme 22 comme représenté sur la figure 3, la plaque 52 de l'ensemble 50 est alors également située dans le prolongement de l'âme 22, à savoir dans un même plan perpendiculaire aux semelles 24,26, tout en étant séparée de cette âme 22 par la semelle inférieure 26.

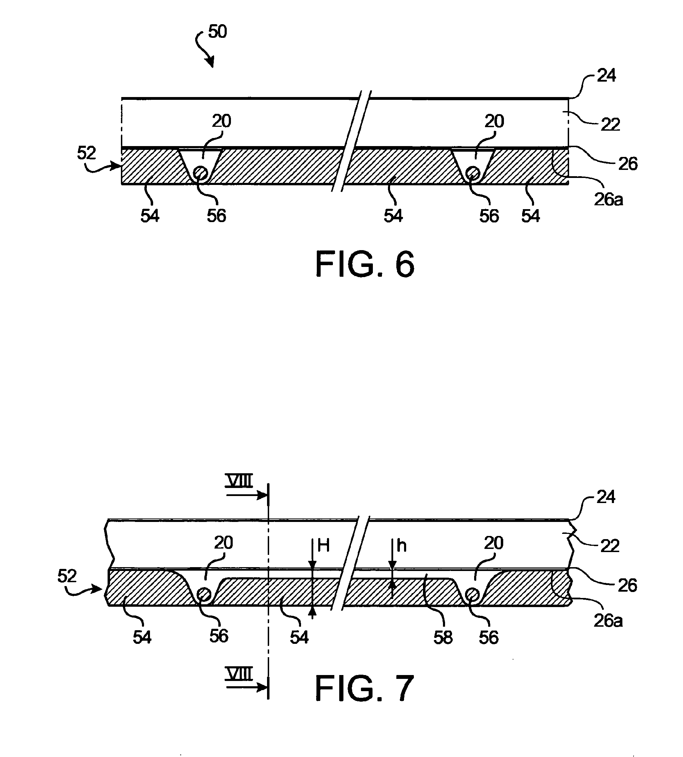

En effet, c'est cette plaque 52 qui est destinée à constituer les organes de raccordement 20 après usinage, comme le représente schématiquement la figure 6 dont les parties hachurées 54 et 56 de l'ensemble monobloc 50 indiquent les portions de la plaque 52 à éliminer par usinage pour faire apparaître respectivement les organes de raccordement 20, ainsi que les orifices traversants associés 32. Il est précisé que dans ce premier mode de réalisation préféré, l'étape d'usinage de la plaque 52 est effectuée de telle sorte que toutes les parties éliminées 54, à savoir celles faisant apparaître les organes de raccordement 20 et non les orifices traversants 32, s'étendent jusqu'à la surface externe 26a de la semelle supérieure 26. Ainsi, à la suite de cette étape d'usinage, les seuls éléments restant de la plaque 52 sont les organes de raccordement 20 faisant saillie de la surface externe 26a de la semelle inférieure 26.

Il est noté à titre indicatif que les moyens d'accrochage de sièges 28 ne sont pas représentés sur les figures 4 à 6, mais qu'ils pourraient naturellement être prévus sur l'ensemble monobloc 50 au-dessus de la semelle supérieure 24, sans sortir du cadre de l'invention. Par ailleurs, il est aussi indiqué que l'épaisseur e de la plaque 52 de l'ensemble monobloc 50 est de préférence identique à l'épaisseur des organes de raccordement 20, de manière à faciliter et écourter l'étape d'usinage. De la même façon, toujours dans le but de faciliter l'opération d'usinage de la plaque 52, celle-ci peut présenter une hauteur H identique à la hauteur des organes de raccordement 20.

Dans un second mode de réalisation préféré du procédé de fabrication selon la présente invention, un ensemble monobloc 50 est tout d'abord réalisé de la même façon que celle indiquée dans la description du premier mode de réalisation préféré.

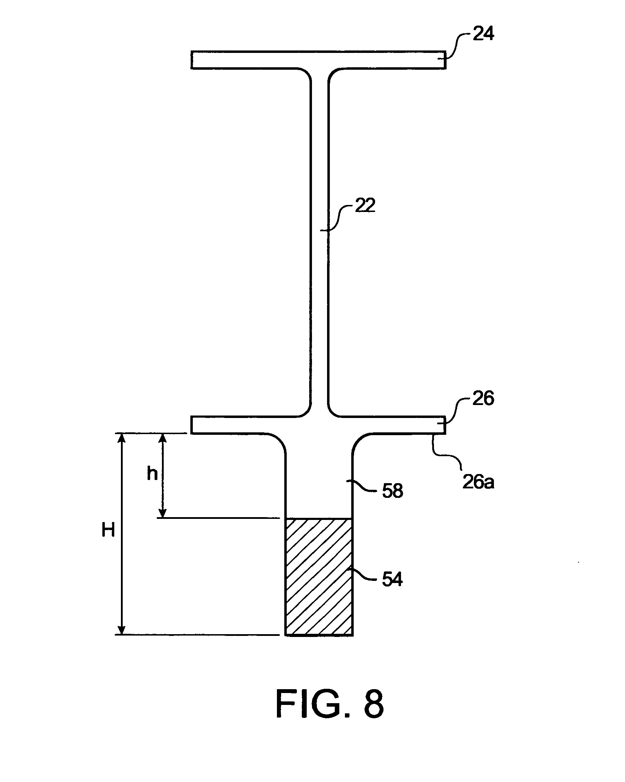

Seule l'étape ultérieure d'usinage de la plaque 52 diffère par rapport à celle décrite précédemment, en ce sens qu'elle est réalisée de telle sorte qu'au moins l'une des parties éliminées 54, à savoir celles faisant apparaître les organes de raccordement 20 et non les orifices traversants 32, ne s'étende pas jusqu'à la surface externe 26a de la semelle supérieure 26. Ainsi, à la suite de cette étape d'usinage, les organes de raccordement 20 faisant saillie de la surface externe 26a de la semelle inférieure 26 ne sont plus les seuls éléments restant de la plaque 52, puisque certains d'entre eux sont reliés par une bande de matière non usinée 58 s'étendant depuis cette même surface externe 26a sur une hauteur h, inférieure à la hauteur H des organes de raccordement 20 et de la plaque 52. Naturellement, comme on peut l'apercevoir sur les figures 7 et 8, il est précisé que les hauteurs h et H sont considérées selon une direction perpendiculaire aux semelles 24,26, qui sont quant à elles parallèles au plancher 4 lorsque les rails 8 sont montés sur l'aéronef.

Il est noté que le fait de prévoir au moins une telle bande de matière 58, rejoignant deux organes de raccordement 20 directement consécutifs et étant réalisée d'un seul tenant avec les autres éléments du rail 8 dans une épaisseur égale à l'épaisseur des organes de raccordement 20, permet de rigidifier longitudinalement l'ensemble du rail 8, et donc de fabriquer celui-ci dans une longueur extrêmement élevée.

Bien entendu, diverses modifications peuvent être apportées par l'homme du métier aux rails de siège 8 pour cabine d'aéronef et aux procédés de fabrication de tels rails qui viennent d'être décrits, uniquement à titre d'exemples non limitatifs, ces modifications n'étant limitées que par la portée des revendications.

## Revendications

1. Rail de siège (8) pour cabine d'aéronef (2), ledit rail comportant une âme (22) située entre une semelle supérieure (24) et une semelle inférieure (26) disposant d'une surface externe (26a) ainsi que d'une surface interne (26b) solidaire de ladite âme (22), ladite semelle supérieure (24) disposant également d'une surface externe (24a) ainsi que d'une surface interne (24b) solidaire de ladite âme (22), ladite surface externe (24a) de la semelle supérieure (24) étant solidaire de moyens d'accrochage de sièges (28), ledit rail étant également équipé d'une pluralité d'organes de raccordement (20, 120) destinés à permettre sa fixation sur une structure (6) de l'aéronef et étant réalisés d'un seul tenant avec l'âme (22), les semelles supérieure et inférieure (24,26) ainsi que lesdits moyens d'accrochage de sièges (28), chaque organe de raccordement (20, 120) présentant au moins un orifice traversant (32, 132a, 132b), **caractérisé en ce que** chaque organe de raccordement (20, 120) fait saillie de ladite surface externe (26a) de la semelle inférieure (26).

2. Rail de siège (8) pour cabine d'aéronef (2) selon la revendication 1, **caractérisé en ce que** lesdits organes de raccordement (20, 120) sont espacés les uns des autres le long du rail.

3. Rail de siège (8) pour cabine d'aéronef (2) selon la revendication 1 ou la revendication 2, **caractérisé en ce que** chaque organe de raccordement (20, 120) se situe sensiblement dans le prolongement de l'âme (22), et est séparé de celle-ci par ladite semelle inférieure (26).

4. Rail de siège (8) pour cabine d'aéronef (2) selon l'une quelconque des revendications précédentes, **caractérisé en ce que** chaque organe de raccordement (20) est un tenon.

5. Rail de siège (8) pour cabine d'aéronef (2) selon l'une quelconque des revendications 1 à 3, **caractérisé en ce que** chaque organe de raccordement (120) est une chape.

6. Rail de siège (8) pour cabine d'aéronef (2) selon l'une quelconque des revendications précédentes, **caractérisé en ce qu'**il est réalisé en aluminium ou dans l'un de ses alliages.

7. Partie d'un aéronef comportant une cabine (2), un plancher de cabine (4), une structure inférieure (6) de l'aéronef, ainsi qu'au moins un rail de siège (8) pour cabine d'aéronef selon l'une quelconque des revendications précédentes, chaque rail (8) étant agencé au niveau du plancher (4).

8. Partie d'un aéronef selon la revendication 7, **caractérisée en ce que** chaque rail de siège (8) pour cabine d'aéronef est raccordé à ladite structure inférieure (6) de l'aéronef par l'intermédiaire d'une pluralité de bielles (14).

9. Procédé de fabrication d'un rail de siège (8) pour cabine d'aéronef (2) selon l'une quelconque des revendications 1 à 6, **caractérisé en ce qu'**il comprend les étapes suivantes :
- la réalisation d'un ensemble monobloc (50) comportant ladite âme (22), les semelles supérieure et inférieure (24, 26), ainsi qu'une plaque (52) parallèle à l'âme (22) et faisant saillie de ladite surface externe (26a) de la semelle inférieure (26) ; et
- l'usinage de ladite plaque (52) visant à éliminer des portions (54, 56) de celle-ci, afin de faire apparaître ladite pluralité d'organes de raccordement (20, 120).

10. Procédé de fabrication d'un rail de siège (8) pour cabine d'aéronef (2) selon la revendication 9, **caractérisé en ce que** l'ensemble monobloc (50) est réalisé par laminage.

## Claims

1. Seat rail (8) for an aircraft cabin (2), said rail comprising a web (22) located between a top flange (24) and a bottom flange (26) with an outer surface (26a) and an inner surface (26b) fixed to said web (22), said top flange (24) also with an outer surface (24a) and an inner surface (24b) fixed to said web (22), said outer surface (24a) of the top flange (24) being fixed to seat attachment means (28), said rail also being equipped with several connection devices (20, 120) designed for its attachment onto an aircraft structure (6) and being made in a single piece with the web (22), the top and bottom flanges (24, 26) and said seat attachment means (28), each connection device (20, 120) having at least one through orifice (32, 132a, 132b), **characterized in that** each connection device (20, 120) projects from said outer surface (26a) of the bottom flange (26).

2. Seat rail (8) for aircraft cabin (2) according to claim 1, **characterized in that** said connection devices (21, 120) are spaced from one another along the rail.

3. Seat rail (8) for an aircraft cabin (2) according to claim 1 or 2, **characterized in that** each connection device (20, 120) is approximately in line with the web (22), and is separated from this web by said bottom flange (26).

4. Seat rail (8) for an aircraft cabin (2) according to any one of the preceding claims, **characterized in that** each connection device (20) is a tenon.

5. Seat rail (8) for an aircraft cabin (2) according to claims 1 to 2, **characterized in that** each connection device (120) is a clevis.

6. Seat rail (8) for an aircraft cabin (2) according to any one of the preceding claims, **characterized in that** it is made of aluminium or an aluminium alloy.

7. Part of an aircraft having a cabin (2), a cabin floor (4), a lower aircraft structure (6), as well as at least one seat rail (8) for the aircraft cabin according to any one of the preceding claims, each rail (8) being positioned level with the floor (4).

8. Part of an aircraft according to claim 7, **characterized in that** each seat rail (8) for an aircraft cabin is connected to said lower aircraft structure (6) by means of a plurality of rods (14).

9. Method of manufacturing a seat rail (8) for an aircraft cabin (2) according to any one of the claims 1 to 6, **characterized in that** it comprises the following steps:
- manufacturing of a single piece assembly (50) comprising said web (22), the top and bottom flanges (24, 26), and a plate (52) parallel to the web (22) and projecting from said outer surface (26a) of the bottom flange (26); and
- machining of said plate (52) so as to eliminate portions (54, 56) of the plate, to show up said plurality of connection devices (20, 120).

10. Method of manufacturing a seat rail (8) for an aircraft cabin (2) according to claim 9, **characterized in that** the single piece assembly (50) is made by rolling.

## Patentansprüche

1. Sitzschiene (8) für eine Luftfahrzeugkabine (2), wobei die Schiene einen Kern bzw. eine Seele (22) aufweist, der/die sich zwischen einer oberen Sohle (24) und einer unteren Sohle (26) befindet und eine Außenfläche (26a) sowie eine mit dem Kern (22) einstückige bzw. fest verbundene Innenfläche (26b) aufweist, die obere Sohle (24) auch eine Außenfläche (24a) sowie eine mit dem Kern (22) einstückige bzw. fest verbundene Innenfläche (24b) aufweist, die Außenfläche (24a) der oberen Sohle (24) mit Sitz-Aufhängungsmitteln (28) einstückig bzw. fest verbunden ist, und die Schiene auch mit mehreren Verbindungselementen (20,120) ausgestattet ist, die dazu bestimmt sind, ihre Befestigung an einer Struktur (6) des Luftfahrzeugs zu gestatten, und die aus einem Stück mit dem Kern (22), den oberen und unteren Sohlen (24,26) sowie den Sitz-Aufhängungsmitteln (28) hergestellt sind, wobei jedes Verbindungselement (20,120) mindestens eine Durchgangsöffnung (32,132a,132b) aufweist, **dadurch gekennzeichnet, dass** jedes Verbindungselement (20,120) von der Außenfläche (26a) der unteren Sohle (26) vorsteht.

2. Sitzschiene (8) für ein Luftfahrzeug (2) nach Anspruch 1, **dadurch gekennzeichnet, dass** die Verbindungselemente (20,120) längs der Schiene voneinander beabstandet sind.

3. Sitzschiene (8) für ein Luftfahrzeug (2) nach Anspruch 1 oder Anspruch 2, **dadurch gekennzeichnet, dass** jedes Verbindungselement (20,120) sich im wesentlichen in der Verlängerung des Kerns bzw. der Seele (22) befindet und von diesem/dieser durch die untere Sohle (26) getrennt ist.

4. Sitzschiene (8) für ein Luftfahrzeug (2) nach einem der vorangehenden Ansprüche, **dadurch gekennzeichnet, dass** jedes Verbindungselement (20) ein Zapfen ist.

5. Sitzschiene (8) für ein Luftfahrzeug (2) nach einem der Ansprüche 1 bis 3, **dadurch gekennzeichnet, dass** jedes Verbindungselement (120) ein Gabelgelenk ist.

6. Sitzschiene (8) für ein Luftfahrzeug (2) nach einem der vorangehenden Ansprüche, **dadurch gekennzeichnet, dass** sie aus Aluminium oder aus einer seiner Legierungen hergestellt ist.

7. Teil eines Luftfahrzeugs mit einer Kabine (2), einem Kabinendeck (4), einer Unterstruktur (6) des Luftfahrzeugs sowie mindestens einer Sitzschiene (8) für eine Luftfahrzeugkabine gemäß einem der vorangehenden Ansprüche, wobei jede Schiene (8) auf Höhe des Decks (4) angeordnet ist.

8. Teil eines Luftfahrzeugs nach Anspruch 7, **dadurch gekennzeichnet, dass** jede Sitzschiene (8) für eine Luftfahrzeugkabine mit der Unterstruktur (6) des Luftfahrzeugs über mehrere Kurbelteile (14) verbunden ist.

9. Verfahren zur Herstellung einer Sitzschiene (8) für eine Luftfahrzeugkabine (2) gemäß einem der Ansprüche 1 bis 6, **dadurch gekennzeichnet, dass** es die folgenden Schritte umfasst:
- die Herstellung einer Monoblock-Einheit (50), welche den Kern bzw. die Seele (22), die oberen und unteren Sohlen (24,26) sowie eine zum Kern (22) parallele und an der Außenfläche (26a) der unteren Sohle (26) vorstehende Platte (52) umfasst, und
- die Bearbeitung der Platte (52), die dazu dient, Abschnitte (54,56) derselben zu entfernen, um die mehreren Verbindungsorgane (20,120) in Erscheinung treten zu lassen.

10. Herstellungsverfahren einer Sitzschiene (8) für eine Luftfahrzeugkabine (2) nach Anspruch 9, **dadurch gekennzeichnet, dass** die Monoblock-Einheit (50) durch Laminieren hergestellt wird.
